# FASCICULE DE BREVET EUROPEEN

(11) **EP 2 000 838 B1**
(45) Date de publication et mention de la délivrance du brevet: **30.12.2009**
(21) Numéro de dépôt: 07010958.2
(22) Date de dépôt: 04.06.2007
(51) Int. Cl.: G02B 6/38

(54) **Contact male pour fibre optique**
Stecker für Lichtleitfaser
Male contact for optical fibre

(43) Date de publication de la demande: 10.12.2008
(73) Titulaire: INTERLEMO HOLDING S.A., 1024 Ecublens (CH)
(72) Inventeur: Hamblin, Christopher, Worthing West Sussex BN13 2PT (GB)
(74) Mandataire: Bugnion Genève

(56) Documents cités:
- EP-A- 0 390 275
- EP-A- 1 079 251
- DE-U1- 9 314 172

## Description

La présente invention concerne un contact mâle pour fibre optique comprenant un corps extérieur d'une matière déformable élastiquement, un guide cylindrique présentant une partie antérieure fixée dans la partie postérieure dudit corps extérieur, et une partie postérieure dépassant ladite partie postérieure dudit corps extérieur, un adaptateur de câble s'étendant à travers ledit guide cylindrique, une ferrule allongée flottante équipée d'un segment de fibre s'étendant à travers la partie antérieure dudit corps extérieur, ladite ferrule étant assemblée à un support de ferrule tubulaire logé de façon mobile dans ledit corps extérieur et présentant des moyens de butée adaptés pour s'appuyer sur des premiers épaulements disposés entre les parties antérieure et postérieure dudit corps extérieur, et un ressort hélicoïdal disposé entre la partie antérieure dudit guide cylindrique et lesdits moyens de butée du support de ferrule poussant lesdits moyens de butée du support de ferrule contre les épaulements dudit corps extérieur.

De tels contacts mâles pour fibre optique sont largement utilisés dans le domaine des communications et des transmissions de données à haute vitesse pour coupler des fibres optiques entre elles ou bien à des sources de lumière ou à des détecteurs. Ils sont d'un intérêt particulier lorsqu'un grand nombre de fibres doivent être installées dans un seul connecteur ou insert puisque de ce fait, les difficultés d'un positionnement et d'un collage individuel des fibres dans le connecteur sont évitées, l'inconvénient majeur de cette solution étant que la rupture d'une seule fibre demande le remplacement de tout l'assemblage. Dans ces contacts mâles pour fibre optique, l'adaptateur de câble est nécessaire afin d'effectuer un sertissage entre ledit adaptateur de câble et la gaine en plastique collée à chaud sur la fibre optique qui s'étend à partir de la ferrule flottante, à travers le corps extérieur et ledit adaptateur de câble.

Lors de l'assemblage d'un tel contact mâle pour fibre optique, on installe la fibre optique dans ladite ferrule flottante qui fait ensuite l'objet d'une opération de polissage très précise car son extrémité doit avoir une forme spécifique afin d'assurer une transmission du signal sans pertes. Ce travail effectué sur une fibre d'un diamètre de 0.125 mm demande une extrême minutie ainsi qu'un appareillage et outillage spécifiques.

Lorsque l'on doit procéder à la réparation d'un câble de fibre optique, suite à la rupture d'une ou plusieurs fibres se trouvant en dehors d'un atelier, par exemple, lors d'une transmission en direct d'un événement sportif ou un reportage en extérieur, on ne dispose pas toujours de l'outillage et de l'appareillage nécessaire, voire d'aucune alimentation électrique pour monter la fibre optique dans la ferrule et la polir.

Pour pallier ce problème, le contact mâle pour fibre optique a été équipé d'un segment de fibre optique collé de façon précise dans la ferrule et dont l'extrémité est polie en usine. Lorsqu'une rupture survient, on utilise un tel contact mâle en introduisant une nouvelle fibre optique par ledit adaptateur de câble jusqu'à ce qu'elle entre en contact avec l'extrémité non polie dudit segment de fibre situé à l'intérieur de ladite ferrule. On sertit ledit adaptateur de câble sur la gaine plastique de la nouvelle fibre et on obtient ainsi une réparation plus que satisfaisante même si la qualité du signal n'est pas aussi bonne que celle d'une fibre d'origine en une partie. Une goutte de gel optique spécifique disposé à la jonction des deux extrémités de fibre en contact améliore cette transmission.

Néanmoins, lors du sertissage de la nouvelle fibre, un léger déplacement vers l'extrémité postérieure du contact peut compromettre la qualité de la jonction. Les différences de température, car on peut travailler dans des conditions atmosphériques extrêmes, peuvent rompre cette jonction par dilatation ou rétraction des deux parties de fibre et/ou du gel optique.

La présente invention a pour but de proposer un contact mâle permettant de pallier aux inconvénients susmentionnés.

Le contact mâle selon l'invention est caractérisé par la clause caractérisante de la revendication 1

Des variantes d'exécution sont définies aux revendications dépendantes.

L'avantage du contact mâle selon l'invention est le fait que l'adaptateur de câble situé dans le guide cylindrique, est monté flottant. En effet, après avoir introduit la nouvelle fibre optique par l'adaptateur de câble jusqu'à la jonction avec le segment de fibre fixé dans la ferrule et serti ledit adaptateur de câble, on retire la butée amovible dudit adaptateur de câble. Le retrait de ladite butée amovible permet à l'adaptateur de câble, sous la pression du ressort hélicoïdal situé dans le guide cylindrique, de maintenir une poussée sur l'adaptateur de câble assurant ainsi un contact permanent à la jonction des deux extrémités de fibre optiques. Le ressort est spécialement dimensionné pour assurer cette jonction aussi bien en cas de dilatation que de contraction des deux parties de fibre.

Selon une variante, la jonction des deux parties de fibre optique se fait au droit d'un orifice prévu sur la ferrule, ce qui permet aussi au gel optique situé à l'endroit de jonction de s'évacuer vers l'extérieur du canal de la ferrule dans lequel les fibres sont logées.

Une exécution de la présente invention sera décrite à l'aide du dessin annexé.

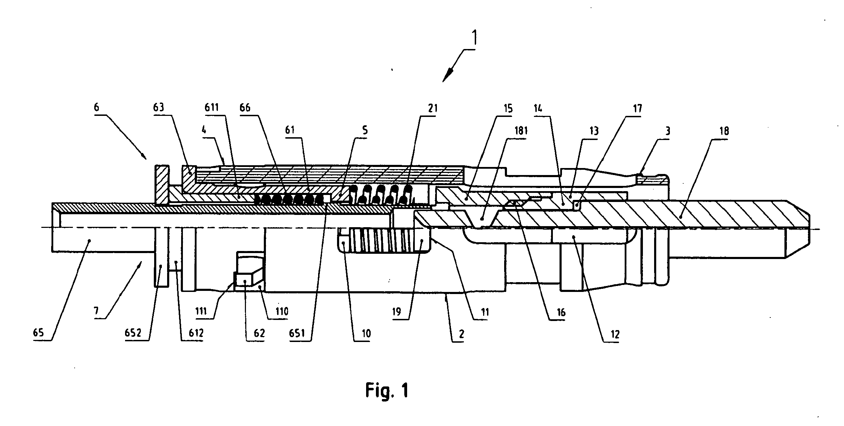

La figure 1 est vue partiellement en coupe longitudinale d'un contact mâle sans fibre.

La figure 2 est vue partiellement en coupe longitudinale d'une ferrule avec une partie du support de ferrule.

Le corps extérieur 2 est de préférence réalisé par injection dans une matière plastique expansible élastiquement. Deux fenêtres 10 sont moulées dans le corps extérieur 2 entre ses parties antérieure 3 et postérieure 4, ces fenêtres se trouvent diamétralement opposées, et leur paroi d'extrémité antérieure forme des premiers épaulements 11. Partant de ces deux fenêtres 10 deux saignées intérieures longitudinales (non représentées) aboutissent au bord de la partie postérieure 4 du corps extérieur 2. Entre ces fenêtres 10 et la partie postérieure 4 du corps extérieur 2, deux autres fenêtres 110 sont également moulées de façon diamétralement opposées, leur paroi d'extrémité postérieure formant des deuxièmes épaulements 111. Partant de ces deux fenêtres 110 deux saignées intérieures annulaires (non représentées) s'étendent sur environ 90°. Deux saignées intérieures longitudinales (non représentées) s'étendent entre la fin de deux saignées annulaires et le bord de la partie postérieure 4 du corps extérieur 2.

La partie antérieure 3 du corps extérieur 2 comprend quatre fentes longitudinales 12 qui sont par paires moulées dans le corps extérieur et situées diamétralement opposées, deux de ces fentes 12 étant alignées respectivement aux fenêtres 10.

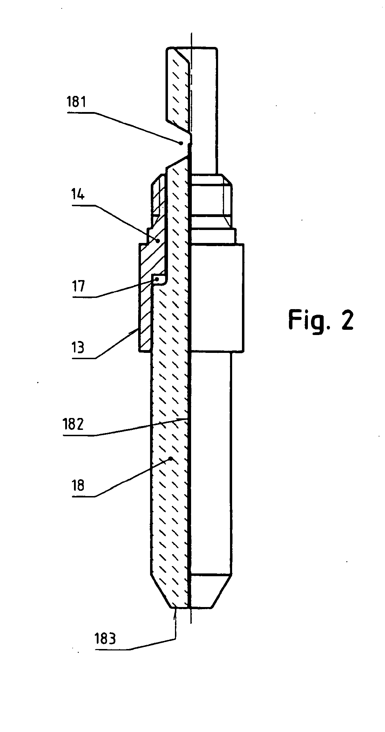

Le support de ferrule 13 comprend une partie tubulaire antérieure 14 et une partie tubulaire postérieure 15 qui sont vissées l'une dans l'autre à l'endroit 16. La partie antérieure 14 comprend un espace longitudinal 17 dans lequel une ferrule cylindrique 18, équipée d'un segment de fibre optique 182 (fig. 2), est insérée avec ajustement à serrage ou collage.

La partie postérieure 15 du support de ferrule 13 comprend deux parties en saillie radiale ou ailettes 19, disposées de manière diamétralement opposée, dont le diamètre extérieur est plus grand que le diamètre intérieur du corps extérieur 2, et qui sont adaptées pour être logées dans les fenêtres 10 du corps extérieur 2. Un ressort hélicoïdal 21 est situé à la suite de l'extrémité postérieure de la partie 15 et s'appuie contre son bord.

L'assemblage du contact mâle 1 pour fibre optique est exécuté comme suit:

Le montage peut se faire de manière similaire à celle décrite dans le EP-A-1079251, c'est-à-dire en tirant profit de la déformation élastique du corps extérieur 2. Néanmoins, dans la variante décrite par la suite, une autre méthode a été choisie. La partie 15 du support de ferrule 13 est introduite par la partie postérieure 4 du corps extérieur 2 de sorte que les ailettes 19 glissent dans les saignées longitudinales aboutissant aux fenêtres 10, une légère déformation élastique du corps extérieur 2 aide cette mise en place. Lorsque les ailettes 19 arrivent dans les fenêtres 10, le corps extérieur 2 reprend sa forme et la partie 15 est emprisonnée. Ensuite on introduit le ressort 21 (qui peut être double comme représenté) qui vient buter contre les ailettes 19 de la partie 15.

Ensuite, on introduit le guide cylindrique 6 dans la partie postérieure 4 du corps extérieur 2. On commence par introduire l'adaptateur de câble 65 dans un premier corps cylindrique 61, ensuite un ressort 66, on chasse et/ou on colle un deuxième corps cylindrique 611 jusqu'à ce que son épaulement annulaire 612 vienne buter contre le bord du premier corps cylindrique 61. Dans cette position le ressort 66 est compressé entre le bord de l'extrémité antérieure du corps 611 et un épaulement 651 situé sur l'adaptateur de câble 65. Une butée amovible 652, qui peut être un Circlip, montée dans une saignée l'adaptateur de câble et s'appuyant contre l'épaulement annulaire 612 du deuxième corps cylindrique 611 maintient le ressort 66 comprimé. Le premier corps cylindrique 61 est muni de deux ailettes radiales extérieures 62 diamétralement opposées. Le guide cylindrique 6 ainsi assemblé est introduit par l'extrémité de la partie postérieure 4 dans le corps extérieur 2 en faisant glisser les ailettes 62 dans les rainures longitudinales qui aboutissent aux rainures annulaires. En arrivant en fin de course de ces rainures annulaires on tourne l'ensemble d'environ 90° et les ailettes 62 aboutissent dans les fenêtres 110 tandis que l'épaulement annulaire 63 du premier corps cylindrique 61 est en butée contre le bord postérieur du corps extérieur 2. On obtient ainsi un verrouillage à baïonnette, les ailettes 62 s'appuyant contre les épaulements 111. Ensuite la ferrule 18 chassée et/ou collée dans la partie 14 de son support est introduite par l'extrémité antérieure du corps extérieur 2. Les deux parties 15 et 14 sont assemblées par vissage. De la colle est déposée sur le pas de vis afin d'en éviter le desserrage. Le ressort hélicoïdal 21 est maintenant comprimé entre la partie antérieure 5 du premier corps cylindrique 61 et le bord de la partie postérieure 15 du support de ferrule 13. Le ressort 21 pousse les ailettes 19 contre les épaulements 11 et les ailettes 62 contre les épaulements 111. Le support de ferrule 13 ainsi logé à l'intérieur du corps extérieur 2, la ferrule 18 reste flottante et s'étend à travers la partie antérieure 3 du corps extérieur 2.

Des modifications sont possibles dans le cadre de l'étendue de la présente invention.

Par exemple, le nombre et la position relative des fenêtres 10, 110 et des fentes longitudinales 12 peuvent être différents. La position angulaire des fentes longitudinales 12 peut également être différente. Les fenêtres 10 et 110 du corps extérieur 2 peuvent être remplacées par deux parois annulaires internes moulées dans le corps extérieur 2. Dans ce cas, les ailettes 19 du support de ferrule peuvent être remplacées par une partie sous forme de disque formé sur la partie arrière 15 du support de ferrule 13. Le guide cylindrique 6 pourrait être en un seul corps cylindrique.

Comme représenté à la figure 2 un segment de fibre optique 182 est collé dans la ferrule 18. Son extrémité antérieure 183 est polie minutieusement en usine. L'autre extrémité du segment 182 arrive jusqu'au milieu d'un orifice 181 de la paroi latérale de la ferrule 18.

Une goutte de gel optique est aussi déposée dans cet orifice.

Lorsque l'on souhaite utiliser ce contact mâle, il est nécessaire d'introduire la fibre optique à travers l'extrémité postérieure de l'adaptateur de câble 65 jusqu' à ce que l'extrémité de ladite fibre arrive en contact avec l'extrémité du segment 182 située dans l'orifice 181, on sertit la fibre optique par des moyens usuels dans l'adaptateur de câble 65 puis on retire la butée amovible 652. Sous la poussée du ressort 66, l'adaptateur de câble 65 assure que les deux extrémités de fibre optique soient en contact. Les dimensions du ressort 66 permettent de "compenser" les éventuels déplacements de la fibre lors du sertissage de cette dernière ainsi que les modifications de longueur en cas de changement de la température. L'orifice 181 permet d'une part l'évacuation d'un éventuel excès de gel optique et d'autre part, compense la dilatation du gel optique en cas d'augmentation de la température. Ainsi, ce montage flottant permet d'assurer un contact constant de deux extrémités de fibre optique.

Pour assembler deux contacts mâles selon l'invention, (face à face) on utilise une douille d'alignement dans laquelle les deux contacts viennent se cliquer de sorte que les extrémités libres de deux ferrules se touchent.

## Revendications

1. Contact mâle pour fibre optique (1) comprenant un corps extérieur (2) d'une matière déformable élastiquement, un guide cylindrique (6) présentant une partie antérieure (5) fixée dans la partie postérieure (4) dudit corps extérieur (2), et une partie postérieure (7) dépassant de ladite partie postérieure (4) dudit corps extérieur (2), un adaptateur de câble (65) s'étendant à travers ledit guide cylindrique (6), une ferrule allongée flottante (18) équipée d'un segment de fibre (182), ladite ferrule (18) s'étendant à travers la partie antérieure (3) dudit corps extérieur (2) et étant assemblée à un support de ferrule tubulaire (13) logé de façon mobile dans ledit corps extérieur (2) et présentant des moyens de butée (19) adaptés pour s'appuyer sur des premiers épaulements (11) disposés entre les parties antérieure (3) et postérieure (4) dudit corps extérieur (2), et un ressort hélicoïdal (21) disposé entre la partie antérieure (5) dudit guide cylindrique (6) et lesdits moyens de butée (19) du support de ferrule (13) poussant lesdits moyens de butée (19) du support de ferrule (13) contre les premiers épaulements (11) dudit corps extérieur (2), **caractérisé par le fait que** le guide cylindrique (6) comprend un premier corps cylindrique (61) muni de moyens de butée (62) adaptés pour s'engager avec des deuxièmes épaulements (111) dudit corps extérieur (2) situés entre lesdits premiers épaulements (11) et la partie postérieure (4) dudit corps extérieur (2) et d'un épaulement annulaire (63) s'appuyant contre le bord de la partie postérieure (4) dudit corps extérieur (2), que ledit premier corps cylindrique (61) comprend un épaulement intérieur (611), que l'adaptateur de câble (65) est monté de manière coulissante à l'intérieur dudit premier corps (61, 611), que l'adaptateur de câble (65) est muni d'un épaulement annulaire (651) situé en aval de la partie antérieure du premier corps cylindrique (61, 611) permettant d'y loger un ressort hélicoïdal (66) s'appuyant sur ledit épaulement annulaire (651) de l'adaptateur de câble (65) et sur l'épaulement intérieur (611) du premier corps cylindrique (61) poussant l'adaptateur de câble (65) en direction de l'extrémité postérieure de la ferrule (18) et que ledit adaptateur de câble (65) est muni sur sa partie située à l'extérieur du premier corps cylindrique (61) d'une butée amovible (652) s'appuyant contre le bord de la partie postérieure du guide cylindrique (6) maintenant en compression ledit ressort hélicoïdal (66) situé à l'intérieur du premier corps cylindrique (61) et rendant flottant l'adaptateur de câble (65) à l'intérieur dudit guide cylindrique (6)après le retrait de ladite butée amovible (652)..

2. Contact mâle selon la revendication 1, **caractérisé par le fait que** ledit épaulement intérieur du premier corps cylindrique (61) est un deuxième corps cylindrique (611) solidaire du premier corps cylindrique (61) et s'appuyant par un épaulement annulaire (612) contre l'épaulement annulaire (63) dudit premier corps cylindrique (61) et de longueur inférieure à celle dudit premier corps cylindrique (61).

3. Contact mâle selon l'une des revendications 1 ou 2, **caractérisé par le fait que** ladite butée amovible (652) est un Circlip disposé dans une saignée dudit adaptateur de câble (65).

4. Contact mâle selon l'une des revendications 1 à 3, **caractérisé par le fait que** la ferrule (18) est munie d'un orifice radial (181) à proximité de son extrémité postérieure donnant accès au logement de la fibre optique.

5. Contact mâle selon la revendication 4, **caractérisé par le fait que** le segment (182) de fibre optique fixé dans la ferrule (18) s'étend de l'extrémité antérieure de la ferrule (183) jusqu'au milieu de l'orifice (181).

6. Contact mâle selon l'une des revendications 1 à 5 **caractérisé par le fait que** lesdits premiers épaulements (11) du corps extérieur (2) sont formés par les parois terminales (11) des fenêtres (10) moulées dans le corps extérieur (2), et lesdits moyens de butée sont réalisés par des saillies radiales (19) du support de ferrule (13) adaptées respectivement pour être logées dans lesdites fenêtres (10) et que les deuxièmes épaulements (111) du corps extérieur (2) sont formés par les parois terminales (111) des fenêtres (110) moulées dans le corps extérieur (2) et que lesdits moyens de butée (62) du premier corps tubulaire (61) sont réalisés par des saillies radiales (62) adaptées respectivement pour être logées dans lesdites fenêtres (110).

7. Contact mâle selon la revendication 6, **caractérisé par le fait que** chacune des fenêtres (10) des premiers épaulements (11) se trouve à l'extrémité d'une rainure longitudinale intérieure du corps extérieur (2) s'étendant jusqu'au bord de la partie postérieure (4) dudit corps extérieur (2), que chacune des fenêtres (110) des deuxièmes épaulements (111) se trouve à l'extrémité d'une rainure annulaire intérieure s'étendant sur environ 90° et dont l'autre extrémité est le point de départ d'une rainure interne longitudinale s'étendant jusqu'au bord de la partie postérieure (4) du corps extérieur (2).

8. Contact mâle selon l'une des revendications 6 ou 7, **caractérisé par le fait que** deux paires de fenêtres (10; 110) sont diamétralement opposées.

9. Contact mâle selon l'une des revendications précédentes, **caractérisé par le fait que** ladite partie antérieure (3) dudit corps extérieur (2) comprend une pluralité de fentes longitudinales (12) moulées dans le corps extérieur a une distance angulaire égale l'une de l'autre.

10. Contact mâle selon l'une des revendications 1 à 5, **caractérisé par le fait que** lesdits premiers épaulements (11) sont formés par une paroi annulaire intérieure du corps extérieur (2)

11. Contact mâle selon la revendication 10, **caractérisé par le fait que** lesdits moyens de butée sont formés par une partie de forme de disque du support de ferrule (13)

12. Contact mâle selon l'une des revendications précédents, **caractérisé par le fait que** ledit support de ferrule (13) est réalisé en deux parties tubulaires (14, 15) qui sont vissées et collées l'une dans l'autre, l'une des parties (15) supportant les moyens de butée (19), et l'autre (14) la ferrule (18) .

## Claims

1. A male contact for optical fiber (1) comprising an outer body (2) of an elastically deformable material, a cylindrical guide (6) having a front portion (5) attached to the rear portion (4) of said outer body (2), and a rear portion (7) protruding from said rear portion (4) of said outer body (2), a cable adapter (65) extending through said cylindrical guide (6), an elongated floating ferrule (18) equipped with a fiber segment (182), said ferrule (18) extending through the front portion (3) of said outer body (2) and being connected to a tubular ferrule holder (13) movably mounted in said outer body (2) and having abutment means (19) suitable for bearing on first shoulders (11) positioned between the front (3) and rear (4) portions of said outer body (2), and a helical spring (21) provided between the front portion (5) of said cylindrical guide (6) and said abutment means (19) of the ferrule holder (13) pushing said abutment means (19) of the ferrule holder (13) against the first shoulders (11) of said outer body (2), **characterized in that** the cylindrical guide (6) comprises a first cylindrical body (61) provided with abutment means (62) suitable for engaging with second shoulders (111) of said outer body (2) situated between said first shoulders (11) and the rear portion (4) of said outer body (2) and an annular shoulder (63) bearing against the edge of the rear portion (4) of said outer body (2), that said first cylindrical body (61) comprises an inner shoulder (611), that the cable adapter (65) is mounted to slide inside said first body (61, 611), that the cable adapter (65) is provided with an annular shoulder (651) situated downstream of the front portion of the first cylindrical body (61, 611) providing a housing therein for a helical spring (66) bearing on said annular shoulder (651) of the cable adapter (65) and on the inner shoulder (611) of the first cylindrical body (61) pushing the cable adapter (65) toward the rear end of the ferrule (18) and that said cable adapter (65) is provided on its part located outside the first cylindrical body (61) with a removable abutment (652) bearing against the edge of the rear portion of the cylindrical guide (6) keeping said helical spring (66) situated inside the first cylindrical body (61) compressed and allowing the cable adapter (65) to float inside said cylindrical guide (6) after said removable abutment (652) is removed.

2. The male contact as claimed in claim 1, **characterized in that** said inner shoulder of the first cylindrical body (61) is a second cylindrical body (611) joined to the first cylindrical body (61) and bearing by an annular shoulder (612) against the annular shoulder (63) of said first cylindrical body (61) and of a length less than that of said first cylindrical body (61).

3. The male contact as claimed in one of claims 1 or 2, **characterized in that** said removable abutment (652) is a circlip positioned in a recess of said cable adapter (65).

4. The male contact as claimed in one of claims 1 to 3, **characterized in that** the ferrule (18) is provided with a radial orifice (181) close to its rear end giving access to the optical fiber housing.

5. The male contact as claimed in claim 4, **characterized in that** the segment (182) of optical fiber fixed in the ferrule (18) extends from the front end of the ferrule (183) to the middle of the orifice (181).

6. The male contact as claimed in one of claims 1 to 5, **characterized in that** said first shoulders (11) of the outer body (2) are formed by terminal walls (11) of the windows (10) molded in the outer body (2), and said abutment means are produced by radial projections (19) of the ferrule holder (13) respectively adapted to be housed in said windows (10) and that the second shoulders (111) of the outer body (2) are formed by the terminal walls (111) of the windows (110) molded in the outer body (2) and that said abutment means (62) of the first tubular body (61) are produced by radial projections (62) adapted respectively to be housed in said windows (110).

7. The male contact as claimed in claim 6, **characterized in that** each of the windows (10) of the first shoulders (11) is at the end of a longitudinal groove inside the outer body (2) extending to the edge of the rear portion (4) of said outer body (2), that each of the windows (110) of the second shoulders (111) is at the end of an internal annular groove extending over approximately 90° and the other end of which is the starting point of a longitudinal inner groove extending to the edge of the rear portion (4) of the outer body (2).

8. The male contact as claimed in one of claims 6 or 7, **characterized in that** two pairs of windows (10; 110) are diametrically opposite.

9. The male contact as claimed in one of the preceding claims, **characterized in that** said front portion (3) of said outer body (2) comprises a plurality of longitudinal slots (12) molded in the outer body at an angular distance that is equal from one to the next.

10. The male contact as claimed in one of claims 1 to 5, **characterized in that** said first shoulders (11) are formed by an inner annular wall of the outer body (2).

11. The male contact as claimed in claim 10, **characterized in that** said abutment means are formed by a disk-shaped portion of the ferrule holder (13).

12. The male contact as claimed in one of the preceding claims, **characterized in that** said ferrule holder (13) is produced in two tubular portions (14, 15) which are screwed and glued to each other, one of the portions (15) supporting the abutment means (19), and the other (14) supporting the ferrule (18).

## Patentansprüche

1. Stecker für Lichtfaser (1), mit einem Aussenkörper (2) aus einem elastisch deformierbaren Material; einer zylindrischen Führung (6), welche ein im hinteren Bereich (4) des genannten Aussenkörpers (2) befestigtes vorderes Teil (5) und einen über den hinteren Bereich (4) des Aussenkörpers (2) vorstehenden hinteren Abschnitt (7) aufweist; einem Kabeladapter (65), der sich durch die genannte zylindrische Führung (6) erstreckt; eine langgestreckte, mit einem Fasersegment (182) versehene schwimmende Ferrule (18), die sich durch das Vorderteil (3) des genannten zylindrischen Aussenkörpers (2) erstreckt und mit einem rohrförmigen Ferrulenträger (13) zusammengebaut ist, welcher im genannten Aussenkörper (2) beweglich gelagert und mit Anschlagmitteln (19) versehen ist, welche zum Tragen gegen eine erste Schulter (11) eingerichtet sind, die zwischen dem vorderen Teil (3) und dem hinteren Bereich (4) des genannten Aussenkörpers (2) angeordnet sind; und einer Schraubenfeder (21), die zwischen dem vorderen Teil (5) der genannten zylindrischen Führung (6) und den genannten Anschlagmitteln (19) am Ferrulenträger (13) liegt und die genannten Anschlagmittel (19) am Ferrulenträger (13) gegen die ersten Schultern (11) des genannten Aussenkörpers (2) drückt,
**dadurch gekennzeichnet, dass** die zylindrische Führung (6) einen ersten zylindrischen Körper (61) mit Anschlagmitteln (62) aufweist, die zum Tragen gegen zweite Schultern (111) am genannten Aussenkörper (2), welche zwischen den genannten ersten Schultern (11) und dem hinteren Bereich (4) des genannten Aussenkörpers (2) angeordnet sind, eingerichtet sind, und mit einem ringförmigen Absatz (63), der am Rand des hinteren Bereichs (4) des genannten Aussenkörpers (2) anliegt; dass der genannte erste zylindrische Körper (61) einen inneren Schulterring (611) aufweist; dass der Kabeladapter (65) gleitend im Inneren des genannten ersten Körpers (61, 611) angeordnet ist; dass der Kabeladapter (65) einen ringförmigen Absatz (651) vor dem vorderen Teil des ersten zylindrischen Körpers (61, 611) aufweist, wodurch der Einsatz einer Schraubenfeder (66) ermöglicht ist, die sich am genannten ringförmigen Absatz (651 des Kabeladapters (65) und am inneren Schulterring (611) des ersten zylindrischen Körpers (61) abstützt und den Kabeladapter (65) in Richtung des Hinterendes der Ferrule (18) drückt; und dass der genannte Kabeladapter (65) an seinem Bereich, der den ersten zylindrischen Körper (61) nach aussen überragt, mit einem abnehmbaren Anschlag (652) versehen ist, der sich am Rand des hinteren Bereichs der zylindrischen Führung (6) abstützt und die genannte, im Inneren des ersten zylindrischen Körpers (61) eingelegte Schraubenfeder (66) gespannt hält und den Kabeladapter (65) im Inneren der genannten zylindrischen Führung (6) nach Rückzug des genannten abnehmbaren Anschlags (652) in einen schwimmenden Zustand versetzt.

2. Stecker nach Anspruch 1, **dadurch gekennzeichnet, dass** der genannte innere Schulterring des ersten zylindrischen Körpers (61) als zweiter zylindrischer Körper (611) ausgebildet ist, der aus einem Stück mit dem ersten zylindrischen Körper (61) besteht und sich über eine ringförmige Abstufung (612) gegen den ringförmigen Absatz (63) des genannten ersten zylindrischen Körpers (61) abstützt und eine Länge aufweist, die kleiner ist als diejenige des genannten ersten zylindrischen Körpers (61).

3. Stecker nach einem der Ansprüche 1 oder 2, **dadurch gekennzeichnet, dass** der genannte abnehmbare Anschlag (652) ein Sprengring ist, der in eine Fuge des genannten Kabeladapters (65) eingesetzt ist.

4. Stecker nach einem der Ansprüche 1 bis 3, **dadurch gekennzeichnet, dass** die Ferrule (18) mit einer radialen Öffnung (181) nahe an ihrem Hinterende versehen ist, welche einen Zugang zum Einbauort der optischen Faser gestattet.

5. Stecker nach Anspruch 4, **dadurch gekennzeichnet, dass** das Segment (182) der optischen Faser, welches in der Ferrule (18) befestigt ist, sich vom Vorderende (183) der Ferrule bis zur Mitte der Öffnung (181) erstreckt.

6. Stecker nach einem der Ansprüche 1 bis 5, **dadurch gekennzeichnet, dass** die genannten ersten Schultern (11) des Aussenkörpers (2) durch endständige Wandungen (11) von Fenstern (10) gebildet werden, welche in den Aussenkörper (2) eingeformt sind, und dass die genannten Anschlagmittel durch radiale Vorsprünge (19) des Ferrulenträgers (13) realisiert und jeweils dazu ausgebildet sind, sich in die genannten Fenster (10) zu erstrecken, dass die zweiten Schultern (111) des Aussenkörpers (2) durch die endständigen Wandungen (111) von Fenstern (110) gebildet werden, die in den Aussenkörper (2) eingeformt sind, und dass die genannten Anschlagmittel (62) des ersten ringförmigen Körpers (61) durch radiale Vorsprünge (62) gebildet werden und dazu eingerichtet sind, jeweils in die genannten Fenster (110) einzutreten.

7. Stecker nach Anspruch 6, **dadurch gekennzeichnet, dass** sich jedes der Fenster (10) der ersten Schultern (11) am Ende einer inneren Längsnut des Aussenkörpers (2) befindet, welche sich bis zum Rand des hinteren Bereiches (4) des genannten Aussenkörpers (2) erstreckt, und dass sich jedes der Fenster (110) der zweiten Schultern (111) am Ende einer inneren ringförmigen Nut befindet, die sich über etwa 90° erstreckt und deren anderes Ende der Beginn einer inneren Längsnut ist, die sich bis zum Rand des hinteren Bereiches (4) des Aussenkörpers (2) erstreckt.

8. Stecker nach einem der Ansprüche 6 oder 7, **dadurch gekennzeichnet, dass** zwei Fensterpaare (10; 110) jeweils diametral einander gegenüber angeordnet sind.

9. Stecker nach einem der vorstehenden Ansprüche, **dadurch gekennzeichnet, dass** das genannte Vorderteil (3) des genannten Aussenkörpers (2) mehrere längsgerichtete Schlitze (12) aufweist, die in den Aussenkörper mit einem Winkelabstand eingeformt sind, der jeweils gleich ist.

10. Stecker nach einem der Ansprüche 1 bis 5, **dadurch gekennzeichnet, dass** die genannten ersten Schultern 11 durch eine ringförmige Innenwandung des Aussenkörpers (2) gebildet sind.

11. Stecker nach Anspruch 10, **dadurch gekennzeichnet, dass** die genannten Anschlagmittel von einem scheibenförmigen Teil des Ferrulenträgers (13) gebildet sind.

12. Stecker nach einem der vorstehenden Ansprüche, **dadurch gekennzeichnet, dass** der genannte Ferrulenträger (13) aus zwei rohrförmigen Teilen (14, 15) besteht, die zusammengeschraubt oder zusammengeklebt sind, wobei das eine Teil (15) die Anschlagmittel (19) und das andere Teil (14) die Ferrule (18) tragen.
